# EUROPEAN PATENT APPLICATION

(11) **EP 4 796 303 A2**
(43) Date of publication of application: **26.08.2026**
(21) Application number: 26160170.2
(22) Date of filing: 23.02.2026
(51) Int. Cl.: B29C 70/30, B29C 70/48, B29C 70/54, B32B 3/06, B32B 5/26, B64C 3/18

(54) **RAMPED COMPOSITE STRUCTURAL MEMBER FOR AIRCRAFT, AND METHOD OF FORMING THE SAME**

(30) Priority: 25.02.2025 GB 202502694
(71) Applicant: Airbus Operations Ltd, Filton, Bristol BS34 7 (GB)
(72) Inventor: BARNETT, Thomas, Bristol, BS34 7PA (GB); SURENDRAN, Vinodh, Bristol, BS34 7PA (GB)
(74) Representative: Mathys & Squire

(57) **Abstract**

A composite structural member for an aircraft, the composite structural member having a ramped region and comprising a plurality of composite plies arranged upon one another in a thickness direction; wherein, in the ramped region, the composite plies include at least first and second subsets of composite plies, each subset comprising a plurality of composite plies; and wherein the second subset of composite plies is staggered in a ramp direction relative to the first subset of composite plies, the staggering producing a flat surface region on the second subset of composite plies, suitable for seating a fastener thereon in use.

A method of forming such a composite structural member by resin transfer moulding, and a method of designing such a composite structural member, are also provided.

## Description

### FIELD OF THE INVENTION

This invention relates to a composite structural member having a ramped region, for use in an aircraft, and a method of forming such a structural member. The ramped region may occupy the entirety of the structural member, or may form one or more parts of the structural member (such as an end of the structural member, or an intermediate part of the structural member). The invention is particularly suitable, but by no means limited, for forming a wing spar of an aircraft. The aircraft type to which the invention relates may be, but is not limited to, commercial passenger aircraft.

### BACKGROUND TO THE INVENTION

There is a desire to reduce the weight of structural members such as wing spars within an aircraft, primarily in order to improve the fuel efficiency of the aircraft. This is particularly the case with commercial passenger aircraft, although similar considerations often apply with other types of aircraft as well.

Traditionally, the structural members of an aircraft, such as wing spars, have been made of metal, such as aluminium alloys. However, over recent years there has been increased interest in using polymer composite materials for such structural members, instead of metals, in order to reduce the weight of the structural members whilst maintaining a suitable level of stiffness and strength.

Such polymer composite materials comprise a polymer matrix with a reinforcing phase therein. The polymer matrix typically comprises epoxy resin, although other resins are also possible. The reinforcing phase typically comprises carbon fibres, although in some cases glass fibres may be used instead, to produce a glass fibre reinforced plastic. In other instances, reinforcing particles, or a mixture of fibres and particles, may be used as the reinforcing phase.

In the present work, the presently-preferred polymer composite material is a carbon fibre reinforced plastic (CFRP) - more particularly, a CFRP comprising carbon fibres within an epoxy resin matrix.

The technique by which such a CFRP structural member is made may comprise resin transfer moulding (RTM). With this technique, multiple plies of carbon fibre preform are laid up in a custom mould, then the mould is sealed and liquid resin (e.g. epoxy resin) is injected into the mould under pressure, impregnating each carbon fibre preform ply to form a respective composite ply, and joining the composite plies, one on top of another, to form the composite structural member.

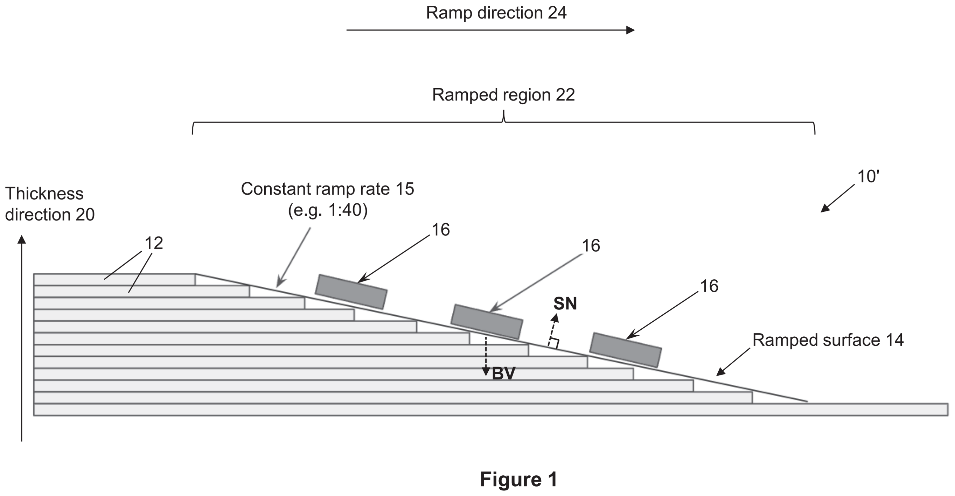

When forming a tapered or ramped region of such a composite structural member, such as a ramped part of a wing spar, the ramped region is conventionally formed by laying up progressively longer plies, e.g. in the manner shown in the present Figure 1.

When assembling such a composite structural member into part of an aircraft (e.g. a wing), it is often necessary to seat fasteners such as nuts on the surface of the structural member. Such nuts may be attached to respective bolts which extend through the structural member, for attaching the structural member to another component, for example. However, when seating nuts on a ramped region of a composite structural member where the ramped region has a surface normal that is at an angle greater than 1° relative to the bolt vector, such as in Figure 1, then self-aligning nuts are generally required for seating on that surface. This may be the case, for example, with a tapered region of a wing spar, as is discussed in greater detail below, and with other tapered parts of an aircraft.

Self-aligning nuts typically have angular tolerances of the order of 5° to 7°, and are considerably more costly than standard (non-self-aligning) nuts, which normally have an angular tolerance of only 1°. More particularly, a self-aligning nut, depending on its size, may cost from 20% to 100% more than an equivalently-sized standard nut. Self-aligning nuts also carry a greater risk of error during installation, compared to standard nuts. For example, there is a risk that an assembly engineer may inadvertently install self-aligning nuts of an incorrect size or type, which would then need to be removed and replaced with self-aligning nuts of the correct size or type before the aircraft part can leave the production line.

There is therefore a desire to reduce the use of self-aligning nuts on ramped composite structural members. As well as saving costs and reducing the risk of installation errors, this may also reduce the amount of Aircraft General Standard (AGS) parts that would need to be stocked in the production line inventory, again reducing costs.

### SUMMARY OF THE INVENTION

Aspects and embodiments of the present invention are set out in the appended claims.

According to a first aspect of the present invention there is provided a composite structural member for an aircraft, the composite structural member having a ramped region and comprising a plurality of composite plies arranged upon one another in a thickness direction; wherein, in the ramped region, the composite plies include at least first and second subsets of composite plies, each subset comprising a plurality of composite plies; and wherein the second subset of composite plies is staggered in a ramp direction relative to the first subset of composite plies, the staggering producing a flat surface region on the second subset of composite plies, suitable for seating a fastener thereon in use. By virtue of forming one or more such flat surface regions, non-self-aligning nuts may advantageously be used instead of self-aligning nuts within the ramped region.

The term "composite ply" as used herein should be interpreted broadly, as potentially encompassing multiple (two or more) sub-plies. This may particularly be the case if each composite ply is provided in fabric form, e.g. as a non-crimp fabric (NCF). Alternatively, however, each composite ply may consist of a single ply.

The aircraft may be a commercial passenger aircraft, for example an aircraft capable of transporting more than 50 passengers, for example more than 100 passengers. For the purposes of this application the term "commercial passenger aircraft" is also taken to include aircraft of the same type configured for cargo transport.

The flat surface region may have a surface normal substantially parallel to the thickness direction.

The composite structural member may further comprise a third subset of composite plies, wherein the third subset of composite plies is staggered in the ramp direction relative to the second subset of composite plies, the staggering producing another flat surface region on the third subset of composite plies, suitable for seating a fastener thereon in use. Further subsets (fourth, fifth, etc.) of composite plies may likewise be present, to produce further flat surface regions.

Optionally the flat surface regions may be formed in a periodically repeated manner within the ramped region.

Within each of the subsets of composite plies, each composite ply may extend beyond a preceding composite ply by a first distance, and each staggered subset of composite plies may be staggered by a second distance beyond a preceding subset of composite plies, the second distance being greater than the first distance.

For example, depending on the fastener size, the second distance may be between about 10 times and about 50 times greater than the first distance.

For example, depending on the fastener size, the second distance may be between about 20mm and 100mm.

The ramped surface may have, for example, an overall average ramp rate of approximately 1:40. Within this, the composite plies of each subset of composite plies may have a local ramp rate of approximately 1:10, for example.

In a presently-preferred embodiment, the composite plies are formed of carbon fibre reinforced plastic (CFRP), e.g. carbon fibre reinforced epoxy resin.

With regard to practical implementations, the composite structural member may be a wing spar, for example, or a variety of other aircraft components, including wing skins or covers, leading edge panels, pylon fixings, control surfaces, and so on.

According to a second aspect of the invention there is provided an aircraft part, such as a wing, comprising a composite structural member according to the first aspect, with one or more fasteners seated on the flat surface region(s). The or each fastener may advantageously be a non-self-aligning nut, or a bolt head.

In the case of the composite structural member being a wing spar, the thickness direction of the composite structural member may be oriented with the thickness of the wing. The ramp direction may be oriented spanwise.

According to a third aspect of the invention there is provided an aircraft comprising an aircraft part according to the second aspect.

According to a fourth aspect of the invention there is provided a method of forming, by resin transfer moulding, a composite structural member according to the first aspect, the method comprising: laying up, in a mould, multiple plies of carbon fibre preform; sealing the mould; and injecting liquid resin into the mould, impregnating each carbon fibre preform ply to form the composite plies, and joining the composite plies, one on top of another, to form the composite structural member. However, manufacturing methods other than resin transfer moulding may also be used to form the present composite structural members. For example, a set of staggered plies, arranged in the manner disclosed herein, may be bonded to an initially-separate flat member (e.g. in the manner of a so-called "non-interleaved pad-up") to produce an overall structural member having a ramped region.

Preferably the mould comprises a machine-tooled contoured surface for controlling the geometry of the ramped region and the subsets of composite plies therein.

Alternatively the mould may comprise a contoured bag surface for controlling the geometry of the ramped region and the subsets of composite plies therein.

According to a fifth aspect of the invention there is provided a method of designing a composite structural member according to the first aspect, the method comprising: obtaining a design of a composite structural member having a ramped region and comprising a plurality of composite plies arranged upon one another in a thickness direction, wherein, in the ramped region, a ramped surface having a substantially constant first ramp rate is formed by successive composite plies progressively extending by substantially equal distances beyond one another in a ramp direction; and adjusting the arrangement of the composite plies of the ramped region to generate a design of a composite structural member having at least first and second subsets of composite plies, each subset comprising a plurality of composite plies, wherein the subsets of composite plies are staggered in the ramp direction to produce flat surface regions suitable for seating fasteners thereon. Such a method may be performed by a computer executing a computer program containing instructions for carrying out the method.

The adjusted composite plies of the ramped region may have an overall average ramp rate equal to the first ramp rate. Consequently, the composite plies of each subset of composite plies may have a local ramp rate greater (steeper) than the first ramp rate. For example, the first ramp rate may be approximately 1:40 and the local ramp rate may be approximately 1:10.

The design method may be followed by manufacturing the composite structural member having the adjusted composite plies. Such manufacturing may also be computer-controlled - for example, performed by a computer-controlled robot.

### BRIEF DESCRIPTION OF THE DRAWINGS

Embodiments of the invention will now be described, by way of example only, and with reference to the drawings in which:
Figure 1 is a schematic side view of a composite structural member having a ramped surface formed by successive composite plies progressively extending beyond one another by substantially equal distances to give a substantially constant ramp rate, and depicting self-aligning nuts seated on the ramped surface;
Figure 2 is a schematic side view of a composite structural member according to the present work, comprising a ramped surface formed by staggered subsets of composite plies to produce flat surface regions suitable for seating non-self-aligning nuts or other fasteners thereon;
Figure 3 is a schematic side view of a composite structural member similar to that of Figure 2, to illustrate further principles of the present work;
Figure 4 illustrates, in plan view, a wing of a passenger aircraft, the wing having a spar formed of a composite structural member of the kind illustrated in Figure 2;
Figure 5 illustrates a passenger aircraft having wings as illustrated in Figure 4;
Figure 6 schematically illustrates a resin transfer moulding setup for forming composite structural members of the kind illustrated in Figure 2; and
Figure 7 illustrates a design method by which the design of a ramped composite structural member having said flat surface regions can be derived from a prior design of a composite structural member not having said flat surface regions.

In the figures, like elements are indicated by like reference numerals throughout. It should be noted that Figures 1, 2, 3 and 6 are schematic and not to scale. In particular, the angular relationship of the illustrated components in these figures may be exaggerated for the sake of clarity and understanding.

### DETAILED DESCRIPTION OF PREFERRED EMBODIMENTS

The present embodiments represent the best ways known to the Applicant of putting the invention into practice. However, they are not the only ways in which this can be achieved.

The present work provides composite structural members having a ramped region (or more than one ramped region), where the ramped region incorporates steps with flat surfaces suitable for receiving non-self-aligning nuts thereon, thereby avoiding the need to use self-aligning nuts. This is despite the ramped region having an overall average ramp rate of a magnitude that would normally require self-aligning nuts to be used.

In the present work, the composite material from which the structural members are made is preferably a carbon fibre reinforced plastic (CFRP) - more particularly, a CFRP comprising carbon fibres within an epoxy resin matrix. However, other composite materials may be used instead. Preferably the present composite structural members are made using resin transfer moulding.

To further explain the problem addressed by the present work, Figure 1 illustrates an example of a composite structural member 10' such a wing spar having a ramped region 22 and comprising a plurality of composite plies 12 arranged upon one another in a thickness direction 20. As illustrated, the ramped region 22 may be a tapered end of the structural member 10' (e.g. wing spar), for example. Alternatively, however, the ramped region 22 may be a tapered intermediate part of the structural member 10'.

Each composite ply 12 may potentially comprise multiple (two or more) constituent sub-plies. This may particularly be the case if each composite ply 12 is provided in fabric form, e.g. as a non-crimp fabric (NCF). Alternatively, however, each composite ply 12 may consist of a single ply.

As those skilled in the art will appreciate, typically wing spar inner surfaces are an offset of the outer wing surface, so are essentially flat. However, changes in spar thickness along the spanwise length may lead to the use of such a ramped region 22, for example having a 1:40 ramp rate.

In producing the ramped region 22 of the composite structural member 10', a ramped surface 14 is formed by successive composite plies 12 progressively extending beyond one another in a ramp direction 24 (the ramp direction 24 being orthogonal to the thickness direction 20). More particularly, in this example of Figure 1, the successive composite plies 12 progressively extend by substantially equal distances beyond one another in the ramp direction 24, giving the ramped surface 14 a substantially constant ramp rate 15, such as 1:40. (It will be appreciated that, in Figure 1, the illustrated ramp rate 15 is shown as being steeper than 1:40, for the sake of clarity and to aid understanding of the principles of the present work.)

It should be noted that, although the ramped surface 14 is schematically illustrated by a straight diagonal line in Figure 1, this is merely for ease of understanding. In practice, the ramped surface 14 may be uneven, due to the steps formed from one ply to the next, although it is also possible for such steps to be smoothed out by matrix material during the fabrication of the composite structural member.

To further illustrate the problem addressed by the present work, nuts 16 are seated on the ramped surface 14. In practice, these nuts 16 may be attached to respective bolts which extend through the structural member 10', to attach the structural member 10' to another component. The bolts have a bolt vector BV, here shown as extending along the thickness direction 20.

The ramped surface 14 has a surface normal SN, which in the illustrated example is at an angle greater than 1° relative to the bolt vector BV. More particularly, for a ramp rate of 1:40 (as in the case of a typical ramped region 22 of a wing spar), the angle between the surface normal SN and the bolt vector BV is approximately 1.4° (given by arctan of the ramp rate, i.e. arctan(1/40), in degrees), although the angle may also be higher than this. Such an angle, being greater than 1°, requires the nuts 16 to be self-aligning. The self-aligning nuts 16 are positioned irrespective of the plies 12 within the ramped region 22. As discussed above, self-aligning nuts are significantly more costly than non-self-aligning nuts, and also have other disadvantages, including an increased risk of installation errors.

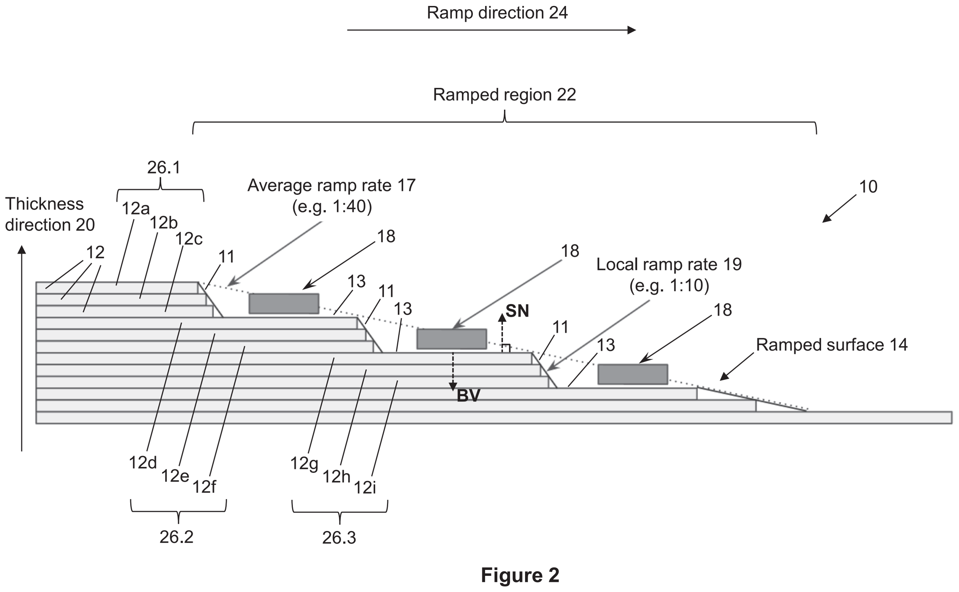

To address the above problem and reduce the use of self-aligning nuts on ramped composite structural members, the present work provides a modified configuration of a ramped composite structural member, as illustrated for example in Figure 2.

More particularly, Figure 2 illustrates a composite structural member 10 having a ramped region 22 and comprising a plurality of composite plies 12 arranged upon one another in a thickness direction 20. As with the arrangement of Figure 1, in the ramped region 22 of Figure 2 a ramped surface 14 is formed by successive composite plies 12 progressively extending beyond one another in a ramp direction 24 (the ramp direction 24 being orthogonal to the thickness direction 20). As above, each composite ply 12 may comprise multiple (two or more) constituent sub-plies, or may consist of a single ply. However, in contrast to the arrangement of Figure 1 in which the successive composite plies 12 progressively extend by substantially equal distances beyond one another in the ramp direction 24 to give a substantially constant ramp rate 15, in the configuration of Figure 2 the plies 12 extend in a staggered, non-uniform manner along their outer ends to produce flat surface regions 13 suitable (in terms of their size, angular orientation and flatness) for acting as nut seats for receiving standard (non-self-aligning) nuts 18 or other fasteners. Standard (non-self-aligning) nuts 18 are able to be used since the surface 13 has a surface normal SN that is parallel to (i.e. within 1° of) the bolt vector BV of the respective nuts (again shown here as extending along the thickness direction 20 of the composite structural member). In other words, each of the flat surface regions 13 has a surface normal SN that is substantially parallel to the thickness direction 20.

More particularly, in the configuration shown by way of example in Figure 2, the composite plies 12 define at least first and second subsets 26 of composite plies. Each subset 26 comprises a plurality of plies, i.e. at least two plies. In the illustrated example, three such subsets are shown, each comprising three composite plies 12. Thus, a first subset 26.1 is formed of composite plies 12a, 12b and 12c, a second subset 26.2 is formed of composite plies 12d, 12e and 12f, and a third subset 26.3 is formed of composite plies 12g, 12h and 12i.

The second subset 26.2 of composite plies is staggered in the ramp direction 24 relative to the first subset 26.1 of composite plies, the staggering producing a flat surface region 13 on the second subset 26.2 (specifically, on the surface of ply 12d), suitable for seating a non-self-aligning nut 18 or other fastener thereon.

Similarly, the third subset 26.3 of composite plies is staggered in the ramp direction 24 relative to the second subset 26.2 of composite plies, the staggering producing another flat surface region 13 on the third subset 26.3 (specifically, on the surface of ply 12g), again suitable for seating a non-self-aligning nut 18 or other fastener thereon. Further subsets (fourth, fifth, etc.) of composite plies may likewise be present, to produce further flat surface regions 13.

As illustrated in Figure 2, multiple flat surface regions 13 are preferably formed in a periodically repeated manner within the ramped region 22. However, in a simple embodiment, it is possible that only one flat surface region 13 is formed within the ramped region 22, due to having only first and second subsets of plies, the second subset being staggered from the first subset to form the flat surface region 13.

Advantageously, the present technique, as illustrated for example in Figure 2, is able to provide an average ramp rate the same as that of the configuration of Figure 1, such that the start and end points of the ramped region 22 remain the same. That is to say, the average ramp rate 17 of the example shown in Figure 2 may be the same as the constant ramp rate 15 of the example shown in Figure 1, namely 1:40. However, rather than having a single uniform ramp rate, the configuration of Figure 2 is created from smaller, relatively steep ramped sections 11 (e.g. having a local ramp rate 19 of 1:10, which is approximately 6°) followed by the flat surface regions 13 suitable for receiving the standard nuts 18 or other fasteners. It will be appreciated that each of the ramped sections 11 corresponds to a respective subset 26 of the composite plies. It will also be appreciated that the local ramp rate 19 is greater (i.e. steeper) than the average ramp rate 17.

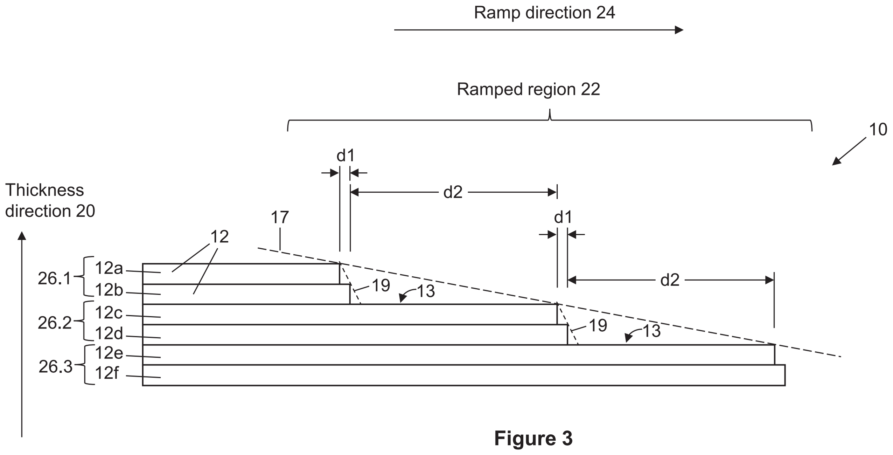

As mentioned above, it is possible for each subset 26 to have two plies rather than three, or conversely, for each subset 26 to have more than three plies. To illustrate the former possibility, Figure 3 illustrates a variant of the configuration shown in Figure 2, but with one fewer ply in each subset 26. Thus, in Figure 3, a first subset 26.1 is formed of composite plies 12a and 12b, a second subset 26.2 is formed of composite plies 12c and 12d, and a third subset 26.3 is formed of composite plies 12e and 12f. This configuration nevertheless adopts the same principles as the configuration of Figure 2.

With reference to Figure 3, it can be seen that, to form each ramped section (11 in Figure 2) of local ramp rate 19, within each of the subsets 26 each composite ply 12 extends beyond a preceding composite ply by a first distance d1. More particularly, in the example of Figure 3, within the first subset 26.1, the second ply 12b extends beyond the first ply 12a by d1. Similarly, within the second subset 26.2, the second ply 12d extends beyond the first ply 12c by d1; and within the third subset 26.3, the second ply 12f extends beyond the first ply 12e by d1.

Meanwhile, each staggered subset 26 is staggered by a second distance d2 beyond the preceding subset 26 of plies, to produce the flat surface regions 13. Specifically, in the example of Figure 3, subset 26.2 is staggered by d2 beyond subset 26.1, and subset 26.3 is staggered by d2 beyond subset 26.2.

It will naturally be appreciated that the second distance d2 is considerably greater than the first distance d1. For example, depending on the fastener size, the second distance d2 may be between about 10 times and about 50 times greater than the first distance d1. Expressed another way, the second distance d2 may be between about 20mm and 100mm, depending on the fastener size.

The second distance d2 defines the width in the ramp direction (and, in turn, the area) of the flat surface regions 13 in which fasteners 18 can be accommodated. It will be appreciated that there is a relationship between the size of the fastener 18 that can be accommodated, the area of the flat surface region 13 required, and how many composite plies 12 need to be dropped at once in each ramped section 11 (i.e. the number of plies in each subset 26). To produce larger flat surface regions 13 suitable for accommodating larger diameter fasteners 18, it may be necessary to drop more plies in each ramped section 11 (i.e. to have more plies per subset 26).

The present work is envisaged to cover up to "7B" diameter fasteners, i.e. standard fasteners having a 7/16 inch (11 mm) diameter, which are suitable for use across most regions of a typical aircraft wing spar. Naturally, in practice, when forming the ramped sections 11, care may often need to be taken to avoid making the ramped sections 11 too steep (i.e. making the flat surface regions 13 too wide), so as to avoid stress concentration effects between the ramped sections 11 and the flat surface regions 13. However, in some cases it may be acceptable to make the ramped sections 11 relatively steep. Potentially, in an extreme case, the ramped surfaces may be perpendicular (or substantially perpendicular) to the flat surface regions, such that d1 is zero, or substantially zero.

### Practical applications

Composite structural members 10 as described above may be used to form a variety of tapered aircraft parts, including primary structures such as (but not limited to) wing spars, wing skins or covers, leading edge panels, pylon fixings, control surfaces, and so on. The present composite structural members 10 may also be used to form smaller aircraft components.

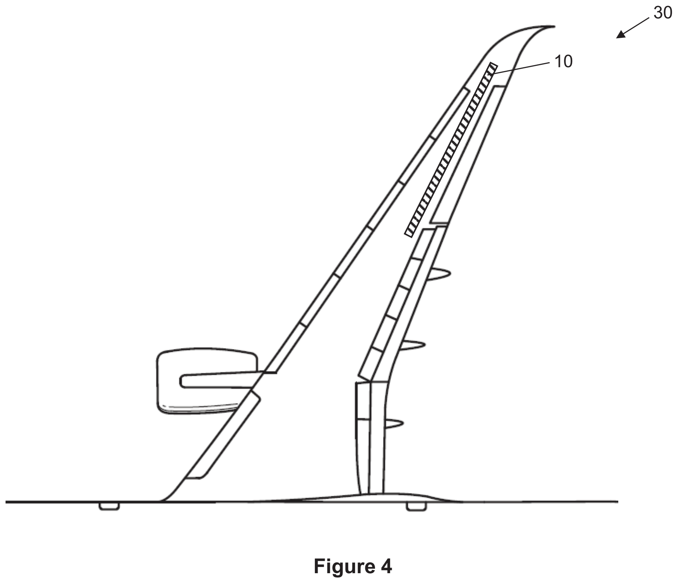

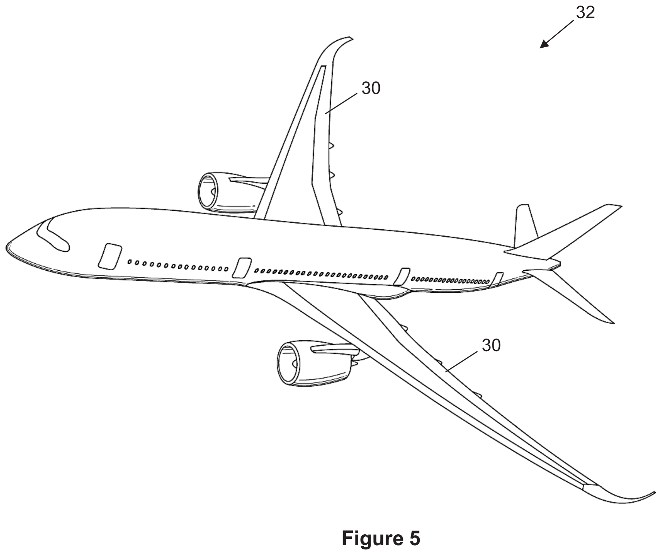

Figure 4 illustrates the use of such a composite structural member 10 as a wing spar within an aircraft wing 30, and Figure 5 illustrates an aircraft 32 having a pair of such wings 30. As shown in Figure 4, in this case the wing spar is an outer spar of the wing 30. In such an example, the thickness direction 20 of the composite structural member 10 is oriented with the thickness of the wing, and the ramp direction 24 of the composite structural member 10 is oriented spanwise (i.e. along the span of the wing 30). Accordingly, the ramped region 22 of the composite structural member 10 may provide a taper at the end of the wing spar, towards the tip of the wing 30.

Bolts may pass through the thickness of the composite structural member 10, along the thickness direction 20, to attach the composite structural member 10 to one or more other components. Such bolts may have a bolt vector BV as shown in Figure 2. Fasteners 18 for such bolts are seated on the flat surface regions 13 of the composite structural members 10. As mentioned above, these fasteners 18 may be non-self-aligning nuts (optionally having a plastic or rubber nut cap, e.g. to mitigate against sparking in the event of a lightning strike). Alternatively, the fasteners 18 may be the heads of the bolts themselves.

### Manufacturing method

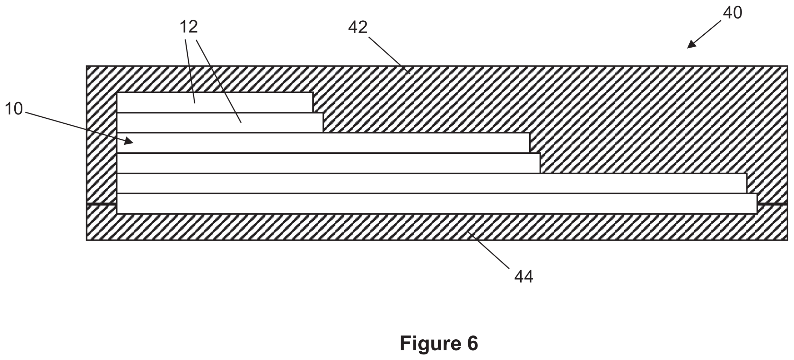

The present composite structural members 10 are well suited to fabrication by resin transfer moulding (RTM) technology, as illustrated for example in Figure 6. With this technique, multiple plies of carbon fibre preform are laid up in a custom mould 40, in a staggered arrangement in order to form the subsets 26 of plies of the end product. The mould 40 may comprise upper and lower mould parts 42 and 44. The mould 40 is sealed and liquid resin (e.g. epoxy resin) is injected into the mould 40 under pressure, impregnating each carbon fibre preform ply to form a respective composite ply 12, and joining the composite plies 12, one on top of another, to form the composite structural member 10.

Machined-tooled surfaces may be used on both sides of the structural member 10 being produced, i.e. as the inner faces of both the mould parts 42 and 44. The use of machine-tooled surfaces reliably determines where the tangent lines (or "tan" lines) will be on the inner mould line surface, allowing a manufacturing engineer to closely control the formation of the staggered subsets 26 of the composite plies, and in turn the position of the flat surfaces 13 where the nuts 18 or other fasteners will seat.

More generally, the mould 40 may comprise a machine-tooled contoured surface (the inner surface of mould part 42) for controlling the geometry of the ramped region 22 of the composite structural member 10 and the subsets 26 of composite plies therein.

Alternatively, the mould may comprise a contoured bag surface for controlling the geometry of the ramped region 22 of the composite structural member 10 and the subsets 26 of composite plies therein. However, the use of such a bag is not currently preferred, as a machine-tooled hard surface is considered to mould the end product with greater precision.

As an alternative manufacturing route, the composite structural member may first be moulded without the flat surfaces 13 in place, e.g. producing a composite structural member 10' as in Figure 1 having a substantially constant ramp rate 15. The ramped sections 11 and the flat surfaces 13 may then be formed in a separate operation, e.g. by cutting or machining the composite structural member 10' after it has been removed from the mould, thereby producing a composite structural member 10 having the ramped sections 11 and the flat surfaces 13 as in Figure 2.

### Design method

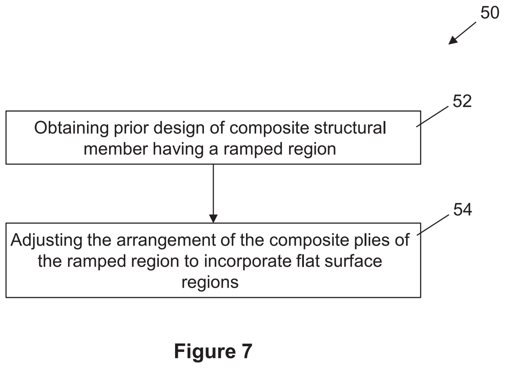

As illustrated in Figure 7, the present work also provides a design method 50 by which a design of a ramped composite structural member 10, having flat surfaces 13 suitable for receiving non-self-aligning fasteners 18, can be derived from a prior design of a ramped composite structural member 10' having a substantially constant ramp rate 15 that is unsuitable for receiving non-self-aligning fasteners 18 - whilst preserving the overall ramp rate 15.

The design method 50 comprises, as a first step 52, obtaining a prior design of a composite structural member 10' of the general form illustrated in Figure 1, having a ramped region 22 with a ramped surface 14 of a substantially constant first ramp rate 15 formed by successive composite plies 12 progressively extending by substantially equal distances beyond one another in the ramp direction 24.

The design method further comprises, as a subsequent step 54, adjusting the arrangement of the composite plies of the ramped region 22 to generate a design of a composite structural member 10 of the general form illustrated in Figure 2, having at least first and second subsets 26 of composite plies, with each subset 26 comprising a plurality of composite plies 12, wherein the subsets 26 of composite plies are staggered in the ramp direction 24 to produce flat surface regions 13 suitable for seating non-self-aligning fasteners 18 thereon.

In the generated design, the adjusted composite plies 12 of the ramped region 22 may have an overall average ramp rate 17 equal to the first ramp rate 15 of the prior design. Advantageously, this enables the newly-designed composite structural member 10 to readily replace the previously-designed composite structural member 10' in the manufacture of an aircraft, whilst enabling non-self-aligning fasteners 18 to be used. It follows that, in the generated design, the composite plies 12 of each subset 26 have a local ramp rate 19 greater (i.e. steeper) than the first ramp rate 15. For example, the first ramp rate 15 may be approximately 1:40, and the local ramp rate 19 may be approximately 1:10.

The method 50 may be performed by a computer executing a computer program containing instructions for carrying out the method.

The method may be followed by manufacturing the composite structural member 10 having the adjusted composite plies, e.g. in the manner as described above. Such manufacturing may also be computer-controlled - for example, performed by a computer-controlled robot.

### Modifications and alternatives

Detailed embodiments and some possible alternatives have been described above. As those skilled in the art will appreciate, a number of modifications and further alternatives can be made to the above embodiments whilst still benefiting from the inventions embodied therein.

## Claims

1. A composite structural member for an aircraft, the composite structural member having a ramped region and comprising a plurality of composite plies arranged upon one another in a thickness direction;
wherein, in the ramped region, the composite plies include at least first and second subsets of composite plies, each subset comprising a plurality of composite plies; and
wherein the second subset of composite plies is staggered in a ramp direction relative to the first subset of composite plies, the staggering producing a flat surface region on the second subset of composite plies, suitable for seating a fastener thereon in use.

2. The composite structural member according to claim 1, further comprising a third subset of composite plies,
wherein the third subset of composite plies is staggered in the ramp direction relative to the second subset of composite plies, the staggering producing another flat surface region on the third subset of composite plies, suitable for seating a fastener thereon in use;
optionally wherein the flat surface regions are formed in a periodically repeated manner within the ramped region.

3. The composite structural member according to claim 1 or claim 2, wherein, within each of the subsets of composite plies, each composite ply extends beyond a preceding composite ply by a first distance, and wherein each staggered subset of composite plies is staggered by a second distance beyond a preceding subset of composite plies, the second distance being greater than the first distance.

4. The composite structural member according to claim 3, wherein the second distance is between about 10 times and about 50 times greater than the first distance;
and/or wherein the second distance is between about 20mm and 100mm.

5. The composite structural member according to any preceding claim, wherein the ramped surface has an overall average ramp rate of approximately 1:40;
optionally wherein the composite plies of each subset of composite plies have a local ramp rate of approximately 1:10.

6. The composite structural member according to any preceding claim, wherein the composite plies are formed of carbon fibre reinforced plastic;
optionally wherein the composite plies are formed of carbon fibre reinforced epoxy resin.

7. The composite structural member according to any preceding claim, being a wing spar.

8. An aircraft part comprising a composite structural member according to any preceding claim, with one or more fasteners seated on the flat surface region(s).

9. The aircraft part according to claim 8, wherein the or each fastener is a non-self-aligning nut;
or wherein the or each fastener is a bolt head.

10. The aircraft part according to claim 8 or claim 9, being an aircraft wing;
optionally, when dependent on claim 7, wherein the thickness direction of the composite structural member is oriented with the thickness of the wing;
optionally wherein the ramp direction is oriented spanwise.

11. An aircraft comprising an aircraft part according to any of claims 8 to 10.

12. A method of forming, by resin transfer moulding, a composite structural member as in any of claims 1 to 7, the method comprising:
laying up, in a mould, multiple plies of carbon fibre preform;
sealing the mould; and
injecting liquid resin into the mould, impregnating each carbon fibre preform ply to form the composite plies, and joining the composite plies, one on top of another, to form the composite structural member.

13. The method according to claim 12, wherein the mould comprises a machine-tooled contoured surface for controlling the geometry of the ramped region and the subsets of composite plies therein;
or wherein the mould comprises a contoured bag surface for controlling the geometry of the ramped region and the subsets of composite plies therein.

14. A method of designing a composite structural member as in any of claims 1 to 7, the method comprising:
obtaining a design of a composite structural member having a ramped region and comprising a plurality of composite plies arranged upon one another in a thickness direction, wherein, in the ramped region, a ramped surface having a substantially constant first ramp rate is formed by successive composite plies progressively extending by substantially equal distances beyond one another in a ramp direction; and
adjusting the arrangement of the composite plies of the ramped region to generate a design of a composite structural member having at least first and second subsets of composite plies, each subset comprising a plurality of composite plies, wherein the subsets of composite plies are staggered in the ramp direction to produce flat surface regions suitable for seating fasteners thereon;
optionally followed by manufacturing the composite structural member having the adjusted composite plies.

15. The method according to claim 14, wherein the adjusted composite plies of the ramped region have an overall average ramp rate equal to the first ramp rate; and
wherein the composite plies of each subset of composite plies have a local ramp rate greater than the first ramp rate;
optionally wherein the first ramp rate is approximately 1:40 and the local ramp rate is approximately 1:10.
